# FASCICULE DE BREVET EUROPEEN

(11) **EP 3 777 106 B1**
(45) Date de publication et mention de la délivrance du brevet: **01.10.2025**
(21) Numéro de dépôt: 19719547.2
(22) Date de dépôt: 26.03.2019
(51) Int. Cl.: H04L 67/104, G06F 9/50, H04L 67/00

(54) **PROCÉDÉ DE GESTION D'UN GROUPE D'ÉQUIPEMENTS, SERVEUR ET SYSTÈME ASSOCIÉS**
VERFAHREN ZUR VERWALTUNG EINER GRUPPE VON AUSRÜSTUNG, ZUGEHÖRIGER SERVER UND SYSTEM
METHOD FOR MANAGING A GROUP OF EQUIPMENT, ASSOCIATED SERVER AND SYSTEM

(30) Priorité: 29.03.2018 FR 1852754
(43) Date de publication de la demande: 17.02.2021
(73) Titulaire: Orange, 92130 Issy-les-Moulineaux (FR)
(72) Inventeur: FLURY, Thibaud, 92326 Châtillon Cedex (FR); OTT, Jean-Didier, 92326 Châtillon Cedex (FR); BERLEMONT, Samuel, 92326 Châtillon Cedex (FR)
(74) Mandataire: Cabinet Beau de Loménie
(86) Numéro de dépôt international: PCT/FR2019/050681
(87) Numéro de publication internationale: WO 2019/186049

(56) Documents cités:
- ROBLES MARIA INES ET AL: "Device group management in constrained networks", 2016 IEEE INTERNATIONAL CONFERENCE ON PERVASIVE COMPUTING AND COMMUNICATION WORKSHOPS (PERCOM WORKSHOPS), IEEE, 14 March 2016 (2016-03-14), pages 1 - 6, XP032893743, DOI: 10.1109/PERCOMW.2016.7457128
- CHEN HUNG-CHI ET AL: "Efficient device group management in oneM2M", 2018 IEEE 4TH WORLD FORUM ON INTERNET OF THINGS (WF-IOT), IEEE, 5 February 2018 (2018-02-05), pages 439 - 444, XP033338369, DOI: 10.1109/WF-IOT.2018.8355131
- FARHADI GOLNAZ ET AL: "Group-Based Signaling and Access Control for Cellular Machine-to-Machine Communication", 2013 IEEE 78TH VEHICULAR TECHNOLOGY CONFERENCE (VTC FALL), IEEE, 2 September 2013 (2013-09-02), pages 1 - 6, XP032548335, ISSN: 1090-3038, [retrieved on 20131222], DOI: 10.1109/VTCFALL.2013.6692218
- TRENTIN IAGO FELIPE ET AL: "Lightweight M2M protocol: Archetyping an IoT device, and deploying an upgrade architecture", 2018 IEEE INTERNATIONAL CONFERENCE ON PERVASIVE COMPUTING AND COMMUNICATIONS WORKSHOPS (PERCOM WORKSHOPS), IEEE, 19 March 2018 (2018-03-19), pages 403 - 408, XP033413429, DOI: 10.1109/PERCOMW.2018.8480313
- STUSEK MARTIN ET AL: "Remote management of intelligent devices: Using TR-069 protocol in IoT", 2016 39TH INTERNATIONAL CONFERENCE ON TELECOMMUNICATIONS AND SIGNAL PROCESSING (TSP), IEEE, 27 June 2016 (2016-06-27), pages 74 - 78, XP033014681, DOI: 10.1109/TSP.2016.7760832

## Description

### Arrière-plan de l'invention

La présente invention se rapporte au domaine général de la gestion d'équipements informatiques, et concerne plus particulièrement un procédé de gestion d'un groupe d'équipements.

Des techniques connues de gestion d'équipements (« device management » en terminologie anglo-saxonne), permettent notamment d'effectuer des opérations de maintenance à distance sur des équipements massivement distribués, tels que des décodeurs de télévision ou encore des routeurs.

Ces opérations de maintenance automatisées (par exemple la mise à jour d'un logiciel embarqué ou « firmware », en terminologie anglo-saxonne) sont définies dans des protocoles normalisés de gestion d'équipements, tels que le protocole TR-069, défini par le rapport technique élaboré par le Broadband Forum, intitulé « CPE WAN Management Protocol » ; OMA-DM, pour « OMA-Device Management » défini par l'organisation OMA (pour « Open Mobile Alliance ») ou OMA-LwM2M (pour « Lightweight Machine to Machine ») également défini par l'OMA.

Selon certaines techniques connues, un serveur référent gère les opérations de maintenance d'une flotte d'équipements d'une même catégorie. Chaque équipement de cette catégorie peut envoyer un message au serveur référent afin que le serveur référent détermine si une opération de maintenance doit être effectuée pour cet équipement, puis lance l'opération de maintenance si celle-ci doit être effectuée.

Cependant, lorsque la flotte d'équipements du même type est importante, le serveur doit être dimensionné en conséquence afin de pouvoir gérer toute la flotte, ce qui génère des coûts financiers importants.

Le document « Device Group Management in Constraind Networks », 2016 IEEE International Conference On Pervasive Computing and Communication Workshops (PERCOM Workshops) publié le 14 mars 2016, décrit un procédé de gestion d'un groupe d'équipements dans le cadre d'une architecture LwM2M (Lightweight Machine to Machine), le système comprenant un serveur, un proxy et des clients.

Le document « Efficient Device Group management In oneM2M », 2018 IEEE 4th World Forum On Internet Of Things (WF-IOT) publié le 5 février 2018 décrit un procédé de gestion d'un groupe d'équipements dans le cadre d'une architecture oneM2M, le système comprenant un serveur, une passerelle comprenant un proxy et des dispositifs. Le proxy permet de gérer des requêtes du serveur qui concernent un groupe de dispositifs.

Le document "Group-based Signaling And Access Control for Cellular Machine-to-Machine Communication", 2013 IEEE 78th Vehicular technology Conference (VTC FALL) publié le 2 septembre 2013, décrit un système de gestion de la communication M2M d'un groupe d'équipements, dans le cadre d'un réseau cellulaire.

### Objet et résumé de l'invention

La présente invention concerne un procédé de gestion d'un groupe d'équipements, ledit procédé comprenant les étapes suivantes, mises en œuvre par un serveur référent principal :
- définition d'un sous-groupe d'équipements dudit groupe d'équipements, ledit sous-groupe d'équipements comprenant au moins deux équipements dudit groupe d'équipements, ayant une même valeur pour au moins un paramètre de configuration commun,
- détermination d'un équipement délégué pour la mise en œuvre d'au moins une partie d'une opération de maintenance sur au moins un équipement dudit sous-groupe d'équipements,
dans lequel ledit équipement délégué est un équipement dudit sous-groupe d'équipements.

La détermination d'un équipement délégué pour la mise en œuvre d'au moins une partie d'une opération de maintenance sur au moins un équipement du sous-groupe d'équipements permet de décharger le serveur référent principal pour cette opération de maintenance, ce qui apporte un gain significatif en termes de performance.

Plus précisément, chaque équipement délégué devant gérer la mise en œuvre d'au moins une partie d'une opération de maintenance sur des équipements d'un sous-groupe comprenant un nombre réduit d'équipements, la durée de l'opération de maintenance est réduite. En effet, le serveur référent principal traite alors moins d'équipements. La commande relative à l'opération est donc plus rapidement diffusée, ce qui diminue la durée globale de l'opération. La capacité du serveur référent principal peut être diminuée, et les coûts associés à l'opération de maintenance sont donc réduits.

L'invention est particulièrement intéressante lorsque l'opération de maintenance est une opération critique, par exemple une opération préventive ou curative liée à une crise de sécurité.

Aucune limitation n'est attachée au nombre de sous-groupes créés pour une pluralité d'équipements dudit groupe d'équipements, ayant une même valeur pour au moins un paramètre de configuration commun. Il est possible de créer plusieurs sous-groupes, afin de limiter la taille du sous-groupe. Ceci permet d'améliorer l'efficacité du procédé proposé.

Dans un mode de réalisation particulier, les équipements du sous-groupe d'équipements ont au moins une caractéristique commune, ladite au moins une caractéristique étant typiquement une régularité de fréquence de connexion au serveur référent principal de l'équipement, ou une zone géographique dans laquelle est positionné l'équipement.

La prise en compte d'une telle caractéristique permet d'optimiser les temps de réponse et de minimiser la latence de communication entre un équipement client et un équipement délégué, tout en assurant une intégrité du sous-groupe d'équipements au cours de la durée de vie estimée du sous-groupe d'équipements. Les équipements changeant souvent de configuration, et qui risquent donc d'être exclus du sous-groupe, et ainsi d'être gérés par le serveur référent principal ne sont donc pas ajoutés au sous-groupe.

Dans un mode de réalisation particulier, l'étape de détermination de l'équipement délégué est effectuée sur la base d'un critère de délégation associé audit équipement délégué. Le critère de délégation est par exemple un critère de qualité de service.

Le critère de qualité de service permet de sélectionner un équipement délégué ayant les capacités d'assurer la gestion de l'opération de maintenance pour chaque équipement de son sous-groupe d'équipements, et ainsi d'assurer une gestion efficace de l'opération de maintenance.

Dans un mode de réalisation particulier, le procédé comprend en outre une étape d'envoi, par le serveur référent principal audit équipement délégué, d'un message comprenant une consigne de transfert, à au moins un équipement dudit sous-groupe d'équipements distinct dudit équipement délégué, d'au moins une commande relative à ladite opération de maintenance

Dans un mode de réalisation particulier, le procédé comprend en outre une étape d'envoi, par le serveur référent principal, à au moins un équipement dudit sous-groupe d'équipements distinct dudit équipement délégué, dit équipement client, d'un message comprenant une consigne de contacter l'équipement délégué à la place du serveur référent principal pour mettre en œuvre ladite opération de maintenance.

Dans un mode de réalisation particulier, ledit message comprenant une consigne de contacter l'équipement délégué, envoyé audit au moins un équipement client comprend en outre au moins une condition d'exclusion dudit sous-groupe d'équipements.

Dans un mode de réalisation particulier, ladite au moins une condition d'exclusion est une condition parmi la liste de conditions d'exclusion suivante :
- une durée maximale d'affectation dudit équipement client audit sous-groupe d'équipements,
- un nombre maximum d'opérations permises effectuées par ledit équipement client,
- un nombre maximal de tentatives dudit équipement client de contacter ledit équipement délégué,
- un échec d'une procédure d'authentification entre ledit équipement client et ledit équipement délégué,
- une détection de fraude ou une détection de faille réseau au niveau dudit équipement délégué,
- une modification d'un paramètre de configuration dudit équipement client,
- une détection d'instructions concernant une opération non permise,
- une détection d'une opération de l'équipement client empêchant l'équipement client de contacter l'équipement délégué.

Dans un mode de réalisation particulier, le procédé comprend en outre les étapes suivantes, mises en œuvre par ledit au moins un équipement du sous-groupe d'équipements :
- une étape de vérification de ladite au moins une condition d'exclusion pour un équipement client dudit sous-groupe d'équipements, et
- si ladite au moins une condition d'exclusion est vérifiée, une étape d'exclusion dudit équipement client dudit sous-groupe d'équipements.

L'exclusion d'un équipement client du sous-groupe d'équipements, sur la base de la vérification de la condition d'exclusion, permet de d'assurer le bon fonctionnement et l'intégrité à moyen ou long terme de la solution de l'invention, car elle permet d'écarter un équipement client du sous-groupe d'équipements, pour lequel l'opération de maintenance ne peut plus être gérée par l'équipement délégué, en raison d'une obsolescence au niveau de l'équipement client et/ou d'un problème technique au niveau de l'équipement client et/ou du serveur référent principal.

Dans un mode de réalisation particulier, le procédé comprend en outre une étape de dissolution dudit sous-groupe d'équipements lorsqu'au moins une condition de dissolution est vérifiée.

Dans un mode de réalisation particulier, ladite au moins une condition de dissolution est une condition parmi la liste de conditions de dissolution suivante :
- une modification d'un paramètre de configuration dudit équipement délégué,
- un nombre d'équipements dudit sous-groupe inférieur à un seuil prédéterminé.

La dissolution du sous-groupe d'équipements est utile lorsque l'équipement délégué n'est plus apte à gérer la mise en œuvre de l'opération de maintenance sur les équipements de son sous-groupe, ou lorsque le nombre d'équipements du sous-groupe est trop faible pour que la gestion de la mise en œuvre de l'opération de maintenance par l'équipement délégué soit efficace.

Le bon fonctionnement ainsi que l'intégrité à moyen ou long terme de la solution proposée sont ainsi assurés, car l'équipement délégué ne tente alors pas de gérer cette opération de maintenance.

Dans un mode de réalisation particulier, le procédé comprend en outre une étape de détermination du nombre maximum d'équipements que peut comprendre ledit sous-groupe d'équipements, en fonction d'au moins un critère de délégation associé audit équipement délégué.

La détermination du nombre d'équipements du sous-groupe d'équipements en fonction d'un critère de délégation de l'équipement délégué (typiquement en fonction de la qualité de service) permet de préserver une partie des ressources de l'équipement délégué pour qu'il puisse réaliser ses tâches habituelles sans que cela soit contraignant pour l'utilisateur de l'équipement délégué.

L'invention concerne de plus un serveur apte à gérer un groupe d'équipements, comprenant :
- un module de définition d'un sous-groupe d'équipements dudit groupe d'équipements, ledit sous-groupe d'équipements comprenant au moins deux équipements dudit groupe d'équipements, ayant une même valeur pour au moins un paramètre de configuration commun,
- un module de détermination d'un équipement délégué pour la mise en œuvre d'au moins une partie d'une opération de maintenance sur au moins un équipement dudit sous-groupe d'équipements,
dans lequel ledit équipement délégué est un équipement dudit sous-groupe d'équipements.

L'invention concerne en outre un système apte à mettre en œuvre un procédé tel que décrit ci-dessus. Ce système comprend un serveur tel que décrit ci-dessus.

Dans un mode particulier de réalisation, les différentes étapes du procédé de gestion sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, un système de gestion d'un groupe d'équipements selon un exemple de mode de réalisation de l'invention ;
- la figure 2 représente, de manière schématique, un serveur référent principal du système de la figure 1 ;
- la figure 3 représente, sous forme d'organigramme, les principales étapes d'un procédé de gestion d'un groupe d'équipements selon un exemple de mode de réalisation de l'invention ;
- la figure 4 représente, sous forme d'organigramme, les principales sous-étapes d'une étape de définition d'un sous-groupe d'équipement, d'un procédé de gestion d'un groupe d'équipements selon un exemple de mode de réalisation de l'invention.

### Description détaillée de plusieurs modes de réalisation

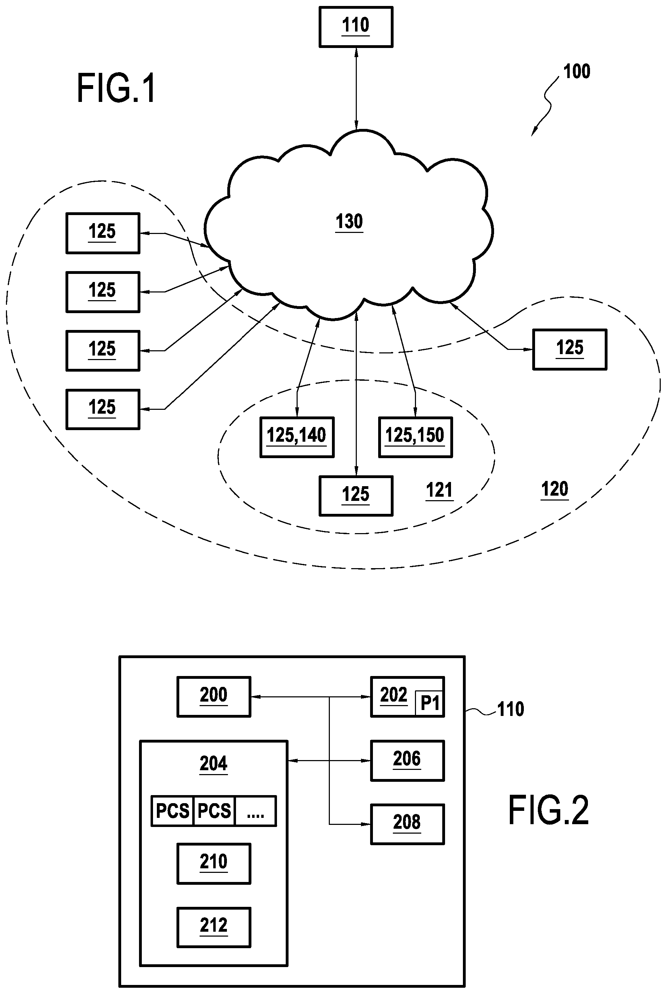

La **figure 1** représente, de manière schématique, un système 100 de gestion d'un groupe d'équipements, apte à mettre en œuvre un procédé de gestion d'un groupe d'équipements, selon un exemple de mode de réalisation de l'invention.

Le système 100 comprend un serveur 110, dit serveur référent principal 110. Le serveur référent principal 110 est apte à gérer un groupe 120 d'équipements comprenant une pluralité d'équipements 125, qui sont par exemple d'une même catégorie. Ainsi, les équipements du groupe 120 d'équipements peuvent être de la catégorie des équipements de terminaison de réseau (« box Internet »), des décodeurs de télévision, des routeurs, des extendeurs Wifi, ou encore des photocopieurs etc.

Le serveur référent principal 110 peut communiquer avec chaque équipement 125 du groupe 120 d'équipements au moyen d'un réseau 130 de télécommunications, par exemple un réseau Internet, un réseau Wifi, un réseau Bluetooth, un réseau NFC, ou un réseau de téléphonie fixe ou mobile (de type 3G, 4G etc.).

Le système 100 peut comprendre en outre un premier équipement 140, ainsi qu'éventuellement un deuxième équipement 150 du groupe 120 d'équipements.

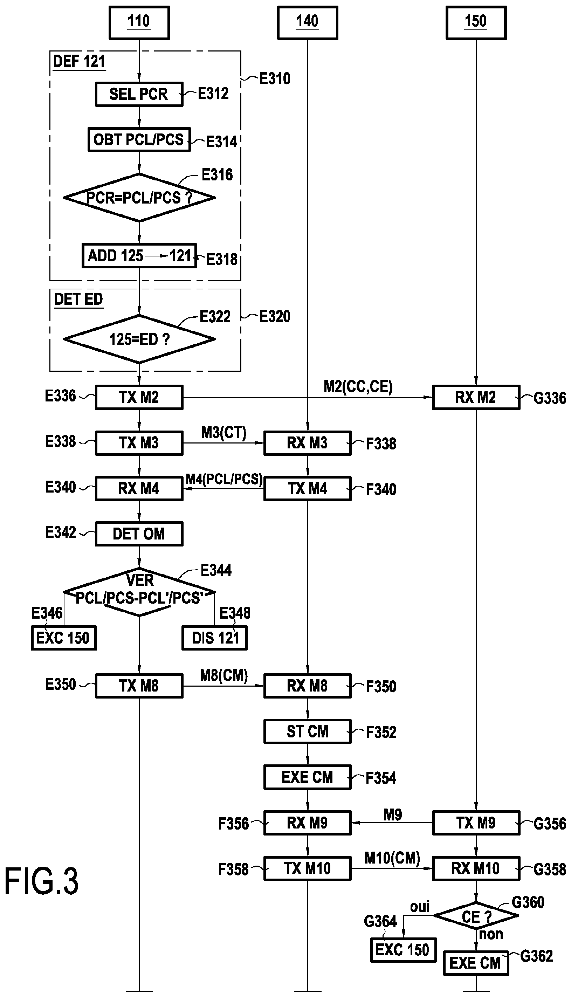

Comme décrit plus en détails ci-dessous en référence à la figure 3, le premier équipement 140 et le deuxième équipement 150 sont deux équipements 125 du groupe 120 d'équipements dont au moins un paramètre de configuration commun prend une même valeur. Le premier équipement 140 et/ou le deuxième équipement 150 sont aptes à communiquer avec chaque équipement 125 du groupe 120 d'équipements, au moyen du réseau 130 de télécommunications.

Le système 100 peut en outre comprendre un ou plusieurs équipements 125 supplémentaires du groupe 120 d'équipements.

Comme le montre la **figure 2****,** le serveur référent principal 110 présente l'architecture conventionnelle d'un ordinateur. Le serveur référent principal 110 comporte notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

La mémoire morte 202 du serveur référent principal 110 constitue un support d'enregistrement conforme à un exemple de mode de réalisation de l'invention, lisible par le processeur 200 et sur lequel est enregistré un programme d'ordinateur P1 conforme à un exemple de mode de réalisation de l'invention. En variante, le programme d'ordinateur P1 est stocké dans la mémoire non volatile réinscriptible 204.

Le programme d'ordinateur P1 peut permettre au serveur référent principal 110 de mettre en œuvre le procédé de gestion conforme à un exemple de mode de réalisation de l'invention, ou au moins une partie de ce procédé.

Ce programme d'ordinateur P1 peut ainsi définir des modules fonctionnels et logiciels, configurés pour mettre en œuvre les étapes d'un procédé de gestion conforme à un exemple de mode de réalisation de l'invention, ou au moins une partie de ces étapes. Ces modules fonctionnels s'appuient sur ou commandent les éléments matériels 200, 202, 204, 206 et 208 du serveur référent principal 110 cités précédemment. Ils peuvent comprendre notamment ici un module de définition et un module de détermination.

La mémoire non volatile réinscriptible 204 peut stocker un ou plusieurs paramètres PCS de configuration de chaque équipement 125, 140, 150 du groupe 120 d'équipements, la valeur de chaque paramètre PCS indiquant par exemple si un service est souscrit ou non par l'utilisateur de l'équipement 125, 140, 150 ou si une option est souscrite ou non par l'utilisateur de l'équipement 125, 140, 150 (télévision, voix sur IP, etc.). L'ensemble des paramètres concernant un équipement du groupe 120 d'équipements est appelé la configuration SI (acronyme de « Système d'Information ») de l'équipement 125, 140, 150.

De plus, la mémoire non volatile réinscriptible 204 peut stocker une structure de données 210, ainsi qu'éventuellement un compteur 212, dont les rôles seront décrits ci-après en référence à la figure 3.

En outre, le premier équipement 140, le deuxième équipement 150 et/ou chaque équipement 125 supplémentaire peuvent aussi présenter l'architecture conventionnelle d'un ordinateur, et peuvent chacun alors comporter notamment un processeur, une mémoire morte (de type « ROM »), une mémoire non volatile réinscriptible (de type « EEPROM » ou « Flash NAND » par exemple), une mémoire volatile réinscriptible (de type « RAM »), et une interface de communication.

Chaque mémoire morte peut constituer un support d'enregistrement conforme à un exemple de mode de réalisation de l'invention, lisible par le processeur associé et sur lequel est enregistré un programme d'ordinateur conforme à un exemple de mode de réalisation de l'invention. En variante, le programme d'ordinateur est stocké dans la mémoire non volatile réinscriptible associée. Le programme d'ordinateur peut permettre la mise en œuvre d'au moins une partie du procédé de gestion conforme à un exemple de mode de réalisation de l'invention.

La mémoire non volatile réinscriptible de chaque équipement 125, 140, 150 peut stocker un ou plusieurs paramètres PCL de configuration de l'équipement 125, 140, 150, la valeur de chaque paramètre PCL pouvant par exemple indiquer la catégorie de l'équipement 125, 140, 150, la version matérielle de l'équipement 125, 140, 150, la version logicielle de l'équipement 125, 140, 150, ou encore d'autres propriétés configurées ou observées localement sur l'équipement 125, 140, 150. L'ensemble des paramètres concernant cet équipement 125, 140, 150 est appelé la configuration locale de l'équipement 125, 140, 150.

La **figure 3** représente un procédé de gestion d'un groupe d'équipements, selon un exemple de mode de réalisation de l'invention.

Le procédé est mis en œuvre par un système de gestion d'un groupe d'équipements, par exemple le système 100 décrit en référence à la figure 1. Le groupe géré par le système 100 est alors le groupe 120 d'équipements, aussi décrit en référence à la figure 1.

Le procédé comprend une étape E310, mise en œuvre par le module de définition du serveur référent principal 110, de définition d'un sous-groupe 121 d'équipements du groupe 120 d'équipements, comprenant au moins deux équipements 125, 140, 150 du groupe 120 d'équipements ayant une même valeur pour au moins un paramètre de configuration commun, ainsi qu'éventuellement une caractéristique commune.

L'étape E310 de définition peut comprendre une sous-étape E312 de sélection d'un ou plusieurs paramètres PCR de configuration de référence. Une ou plusieurs caractéristiques de référence peuvent aussi être sélectionnées.

Chaque paramètre PCR sélectionné peut être un paramètre de configuration PCL de configuration locale, ou un paramètre PCS de configuration SI.

La sous-étape E312 de sélection peut comprendre en outre, pour chaque paramètre PCR sélectionné, une sélection d'une valeur de référence du paramètre PCR.

La ou les valeurs de paramètres PCR sont sélectionnées de sorte à former une condition de déclenchement d'une opération de maintenance, par exemple une condition nécessaire et suffisante au déclenchement de l'opération de maintenance. La sélection porte sur une ou plusieurs valeurs susceptibles d'être partagées par plusieurs équipements 125 du groupe 120 d'équipements.

L'opération de maintenance est par exemple la mise à jour d'un logiciel embarqué (firmware), au moins une valeur indiquant la version du logiciel embarqué nécessitant l'opération de maintenance.

Le serveur référent principal 110 détermine par exemple que l'ensemble de paramètres PCR comprend un paramètre PCL, dont la valeur indique un numéro de version logicielle du premier équipement 140, et un paramètre PCS, dont la valeur indique la souscription à un service par l'utilisateur du premier équipement 140, et que cet ensemble forme une condition nécessaire et suffisante pour déclencher une opération de maintenance. Le serveur référent principal 110 sélectionne alors dans cet exemple deux paramètres PCR de configuration de référence.

En outre, chaque caractéristique de référence éventuellement sélectionnée peut être une régularité de fréquence de connexion au serveur référent principal 110 de l'équipement, ou une zone géographique dans laquelle est positionné l'équipement.

L'étape E310 de définition peut comprendre une sous-étape d'obtention E314 des paramètres PCL, PCS de configuration d'une pluralité d'équipements 125, 140, 150 du groupe d'équipements 120 (par exemple tous les équipements), correspondant à ou aux paramètres PCR sélectionnés à la sous-étape E312. Les caractéristiques de ces équipements correspondant à la ou les caractéristiques sélectionnées peuvent aussi être obtenues. Pour chacun desdits équipements de ladite pluralité d'équipements, un ou plusieurs paramètres PCL, PCS de configuration sont ainsi obtenus, ainsi qu'éventuellement une ou plusieurs caractéristiques. On considère par la suite que ladite pluralité d'équipements comprend le premier équipement 140 et le deuxième équipement 150.

Au moins une partie des paramètres PCL, PCS et/ou des éventuelles caractéristiques (typiquement les paramètres PCS de configuration SI) sont par exemple préenregistrés dans la mémoire non volatile réinscriptible 204 du serveur référent principal 110, et/ou dans une base de données dédiée, et sont alors obtenus depuis cette mémoire ou cette base de données.

Le serveur référent principal 110 peut, pour chaque équipement 125, 140, 150 de ladite pluralité d'équipement, enregistrer dans la structure de données 210 et en association avec l'identifiant de l'équipement, un ou plusieurs paramètres PCS de la configuration SI de l'équipement.

De plus, chaque équipement 125, 140, 150 de ladite pluralité d'équipements peut envoyer au moins une partie des paramètres et/ou des éventuelles caractéristiques au serveur référent principal 110. Un équipement du groupe 120 d'équipements peut typiquement envoyer un ou plusieurs paramètres et/ou caractéristiques dans un premier message M1, par exemple envoyé périodiquement et/ou lors d'un événement prédéterminé, tel que la mise sous tension du premier équipement 140, et/ou la fin d'une opération de mise à jour.

Le premier message M1 comprend typiquement au moins un paramètre de configuration PCL de la configuration locale de l'équipement 125 envoyant le premier message. Le premier message M1 est un message généralement envoyé afin que le serveur référent principal 110 détermine si une opération de maintenance doit être mise en œuvre sur l'équipement 125, 140, 150. Si le premier message M1 ne comprend pas un paramètre attendu, le serveur référent principal 110 peut envoyer une requête à l'équipement 125 pour que celui-ci envoie le paramètre.

Le serveur référent principal 110 peut ensuite enregistrer, dans la structure de données 210, le ou les paramètres PCL de configuration reçus, en association avec un identifiant de l'équipement 125, 140, 150 associé, c'est-à-dire l'équipement ayant envoyé le premier message M1 comprenant le ou les paramètres PCL.

La sous-étape E314 peut être mise en œuvre, pour un ou plusieurs équipements de la pluralité d'équipements du groupe 120 d'équipements, avant la sous-étape E312, ou après la mise en œuvre de la sous-étape E312.

Lorsque la sous-étape E314 est mise en œuvre avant la sous-étape E312, les paramètres PCR de configuration de référence et/ou caractéristiques de référence sont alors sélectionnés parmi les paramètres PCL, PCS et/ou caractéristiques obtenus à la sous-étape E314.

Lorsque la sous-étape E314 est mise en œuvre après la sous-étape E312, les paramètres PCL, PCS et/ou caractéristiques obtenus à la sous-étape E314 sont obtenus en fonction des paramètres PCR et/ou caractéristiques de référence sélectionnés à la sous-étape E312.

La sous-étape E314 peut par exemple être mise en œuvre une première fois pour un équipement de la pluralité d'équipements, avant la mise en œuvre de la sous-étape E312. Cet équipement est alors ajouté au sous-groupe 121 d'équipements, sans que la sous-étape de comparaison E316, décrite ci-dessous, soit mise en œuvre. Après la mise en œuvre de la sous-étape E312, la sous-étape E314 peut être mise en œuvre pour un ou plusieurs autres équipements de la pluralité d'équipements.

L'étape E310 peut comprendre en outre une sous-étape de comparaison E316 des valeurs des paramètres PCL, PCS de configuration obtenus aux valeurs de référence des paramètres PCR de référence correspondants, et des éventuelles caractéristiques obtenues aux éventuelles caractéristiques de référence correspondantes.

Si, pour chaque paramètre de référence, la valeur du paramètre PCL, PCS correspondant d'un équipement 125, 140, 150 du groupe 120 d'équipements correspond à la valeur de référence du paramètre PCR de référence, et éventuellement si pour chaque caractéristique de référence, la caractéristique correspondante de l'équipement 125, 140, 150 est retrouvée, le sous-groupe 121 peut comprendre l'équipement 125, 140, 150. L'équipement 125, 140, 150 peut alors être ajouté au sous-groupe 121 d'équipements (sous-étape E318).

Le sous-groupe 121 défini peut comprendre un nombre limité d'équipements 125, 140, 150. Le nombre d'équipements ajoutés au sous-groupe 121 peut être compté par le serveur référent principal 110 au moyen du compteur 212. Le serveur référent principal 110 peut par exemple incrémenter de un le compteur 212 à chaque fois qu'un équipement 125, 140, 150 est ajouté au sous-groupe 121, et arrêter d'ajouter des équipements lorsque la valeur du compteur 212 est égale à une valeur seuil VS de compteur. La valeur seuil VS est typiquement une valeur comprise entre 10 et 20.

Une condition temporelle peut aussi être ajoutée, le sous-groupe 121 étant considéré comme complet si la valeur du compteur 212 est supérieure à la valeur seuil VS de compteur avant la fin d'une durée prédéterminée.

Le sous-groupe 121 d'équipements défini à l'étape E310 comprend ainsi au moins deux équipements 125, 140, 150 ayant une même valeur pour au moins un paramètre commun et une éventuelle même caractéristique, le paramètre commun étant le paramètre de référence sélectionné à la sous-étape E312 et l'éventuelle caractéristique est l'éventuelle caractéristique sélectionnée à la sous-étape E312.

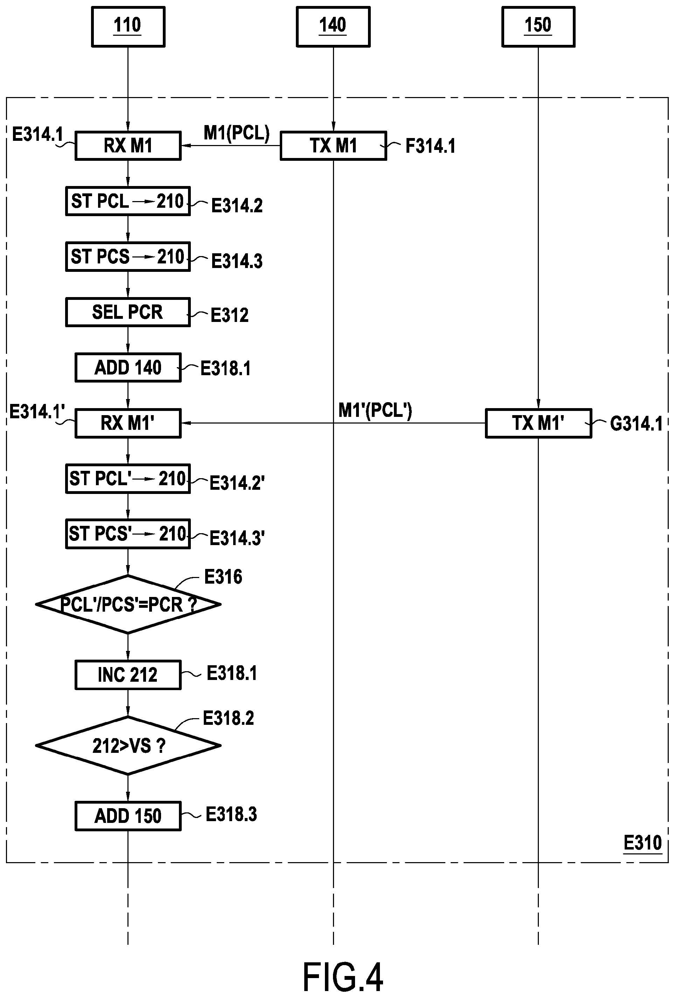

La **figure 4** illustre un exemple de mise en œuvre de l'étape E310 de définition, dans lequel la constitution du sous-groupe 121 est progressive. Dans cet exemple, la sous-étape E314 d'obtention de l'étape E310 de définition peut comprendre une réception E314.1, par le serveur référent principal 110, d'un premier message M1 envoyé par le premier équipement 140. Le premier équipement 140 envoie (étape F314.1) par exemple ce premier message M1 périodiquement et/ou lors d'un événement prédéterminé, tel que la mise sous tension du premier équipement 140, et/ou la fin d'une opération de mise à jour.

Le premier message M1 comprend au moins un paramètre de configuration PCL de la configuration locale du premier équipement 140. Le premier message M1 est un message généralement envoyé afin que le serveur référent principal 110 détermine si une opération de maintenance doit être mise en œuvre sur l'équipement 125, 140, 150.

Le serveur référent principal 110 peut ensuite enregistrer (E314.2), dans la structure de données 210, le ou les paramètres PCL de configuration reçus, en association avec un identifiant du premier équipement 140.

La sous-étape E314.2 ainsi que les sous-étapes suivantes peuvent ne pas être mises en œuvre lorsqu'une mise à jour du premier équipement 140 doit être effectuée, car la configuration du premier équipement 140 peut alors changer.

Dans une sous-étape E314.3, le serveur référent principal 110 peut enregistrer, dans la structure de données 210 et en association avec l'identifiant du premier équipement 140, un ou plusieurs paramètres PCS de la configuration SI du premier équipement 140.

Le serveur référent principal 110 sélectionne ensuite au moins un paramètre PCR de référence parmi le ou les paramètres PCL et/ou PCS du premier équipement 140 (sous-étape E312).

Chaque paramètre PCR de configuration de référence sélectionné à la sous-étape E312 peut être un paramètre PCL de la configuration locale ou un paramètre PCS de la configuration SI enregistré dans la structure de données 210. Les valeurs de référence des paramètres de référence sont ensuite sélectionnées.

Le premier équipement 140 est ajouté (sous-étape 318.1) au sous-groupe 121 d'équipements.

Les sous-étapes E314.1 et F314.2 sont réitérées pour le deuxième équipement 150 (sous-étapes E314.1' et G314.1). Le deuxième équipement 150 envoie alors un premier message M1' comprenant au moins un paramètre PCL' de la configuration locale du deuxième équipement 150. Les sous-étapes E314.2 et/ou E314.3 peuvent alors aussi être réitérées pour le deuxième équipement 150 (sous-étapes E314.2' et E314.3').

Le serveur référent principal 110 obtient ainsi le ou les paramètres PCL' et/ou PCS' de configuration du deuxième équipement 150 correspondant à ou aux paramètres PCR de configuration de référence, et compare leurs valeurs aux valeurs de référence (sous-étape E316).

Si pour chaque paramètre PCR de référence sélectionné à la sous-étape E312, la valeur du paramètre PCL', PCS' correspondant du deuxième équipement 150 est la même que la valeur de référence du paramètre PCR de référence, le serveur référent principal 110 peut incrémenter de un la valeur du compteur 212 dans une sous-étape E318.1, puis comparer la valeur du compteur 212 à une valeur seuil VS de compteur (sous-étape E318.2).

Si la valeur du compteur 212 est inférieure ou égale à la valeur seuil VS de compteur, le serveur référent principal ajoute alors le deuxième équipement 150 au sous-groupe 121 comprenant le premier équipement 150 (sous-étape E318.3).

Les sous-étapes E314.1', G314.1, E314.2', E314.3', E316, E318.1 et/ou E318.2 peuvent ne pas être mises en œuvre lorsqu'une mise à jour du deuxième équipement 150 doit être effectuée, car la configuration du deuxième équipement 150 peut alors changer.

Les sous-étapes E314.1', G314.1, E314.2', E314.3', E316, E318.1 et/ou E318.2 de l'étape E310 peuvent être réitérées pour un ou plusieurs autres équipements 125 du groupe 120 d'équipements.

Lorsque, dans la sous-étape E318.2, la valeur du compteur 212 est supérieure à la valeur seuil VS de compteur (i.e. le serveur référent principal 110 a détecté un nombre prédéterminé d'équipements ayant une même valeur pour au moins un paramètre commun supérieur à la valeur seuil VS), le sous-groupe 121 d'équipements est complet.

Dans la suite de la description, il est considéré que le sous-groupe 121 d'équipements comprend au moins le premier équipement 140 et le deuxième équipement 150.

Dans une étape E320, le module de détermination du serveur référent principal 110 détermine un équipement délégué ED pour la mise en œuvre d'au moins une partie de l'opération de maintenance, sur au moins un équipement 125, 150 dudit sous-groupe 121 d'équipements.

L'étape E320 est par exemple mise en œuvre après l'étape E310 de définition du sous-groupe 121 d'équipement. L'équipement délégué ED est alors déterminé parmi les équipements 125, 140, 150 du sous-groupe 121 d'équipements.

En variante, l'étape E320 est mise en œuvre avant l'étape E310 de définition du sous-groupe 121 d'équipement. Le ou les paramètres PCR de référence sélectionnés à la sous-étape E312 sont alors des paramètres PCL, PCS de l'équipement délégué ED.

L'équipement délégué ED est ainsi désigné pour initier, lorsque cela est nécessaire, l'opération de maintenance, associée aux paramètres PCR de référence, sur un ou plusieurs autres équipements 125, 150 du sous-groupe 121 d'équipements, par exemple tous les autres équipements 125, 150.

La détermination de l'équipement délégué ED est effectuée sur la base d'au moins un critère de délégation associé à l'équipement délégué ED. Un critère de délégation est par exemple un critère de qualité de service dudit équipement délégué ED.

Le critère de qualité de service comprend une ou plusieurs valeurs seuil de propriétés techniques de qualité de service, telles que la bande passante, la latence, le temps d'activité sans interruption, etc.

Un critère de délégation peut en outre être une approbation de l'utilisateur de l'équipement quant à l'élection dudit équipement comme équipement délégué ED.

L'utilisateur peut par exemple adhérer à une offre et en contrepartie accepter de mettre à disposition une partie prédéfinie des capacités de son équipement pour initier des opérations de maintenance sur d'autres équipements.

Lorsque l'étape E310 est mise en œuvre avant l'étape E320, le serveur référent principal 110 détermine, dans une sous-étape E322, pour un équipement du sous-groupe 121 d'équipements (par exemple le premier équipement 140), si cet équipement remplit le critère de délégation.

Par exemple, lorsque le critère de délégation est un critère de qualité de service, le serveur référent principal 110 obtient une ou plusieurs propriétés techniques de la qualité de service offerte par l'équipement considéré, par exemple en les mesurant. Ensuite, le serveur référent principal 110 compare la ou les valeurs obtenues à la ou les valeurs seuils correspondantes. L'équipement considéré remplit le critère de qualité de service si la ou les valeurs obtenues sont supérieures ou égales à la ou les valeurs seuils correspondantes.

La sous-étape E322 est mise en œuvre pour au moins un équipement 125, 140, 150 du sous-groupe 121, par exemple le premier équipement 140 ou le deuxième équipement 150. L'étape E334 peut être réitérée pour un ou plusieurs autres équipements, par exemple tous les équipements du sous-groupe 121.

Le résultat de la première mise en œuvre de la sous-étape E322, ainsi qu'éventuellement le résultat d'une ou plusieurs autres mises en œuvre de la sous-étape E322 sont utilisés afin de déterminer l'équipement délégué ED. En effet, si un équipement 125, 140, 150 remplit le critère de délégation, il est éligible pour devenir un équipement délégué ED. Lorsque plusieurs équipements 125, 140, 150 sont éligibles pour devenir un équipement délégué, l'équipement délégué est par exemple choisi au hasard parmi ces équipements 125, 140, 150.

Lorsque l'étape E320 est mise en œuvre avant l'étape E310, l'étape E320 est mise en œuvre de la même manière, mais pour un ou plusieurs équipements 125, 140, 150 du groupe 120 d'équipements.

Par la suite, il est considéré que le premier équipement 140 remplit le critère de délégation et qu'il est déterminé comme étant l'équipement délégué ED du sous-groupe 121 d'équipements. Les autres équipements 125, 150 du sous-groupe 121 d'équipements, dont le deuxième équipement 150, sont alors appelés équipements client.

Une étape (non représentée) de détermination d'un nombre maximum d'équipements clients que peut comprendre le sous-groupe 121 d'équipements peut être mise en œuvre en fonction d'un critère de qualité de service de l'équipement délégué ED, 140 par exemple le critère de l'étape E320. Le serveur référent principal 110 peut alors ajuster le nombre d'équipements clients du sous-groupe 121 d'équipements, en fonction de ce critère.

Dans une étape E336, le serveur référent principal 110 envoie à chaque équipement client (par exemple au deuxième équipement 150) un deuxième message M2 comprenant une consigne CC de contacter l'équipement délégué 140 à la place du serveur référent principal 110 pour mettre en œuvre une ou plusieurs opérations de maintenance, par exemple l'opération de maintenance associée aux paramètres PCR de référence sélectionnés à la sous-étape E312, ainsi qu'éventuellement des opérations de maintenance suivant cette opération de maintenance. Plus précisément, la consigne CC est de ne plus envoyer le premier message M1 au serveur référent principal 110 mais d'envoyer un message M9, similaire au premier message M1, à l'équipement délégué 140.

Par « similaire », on entend que le message M9 est du même type que le premier message M1 (message de connexion), le contenu du message pouvant être modifié en fonction du contexte d'envoi du message, typiquement en fonction d'informations relatives à l'activité de l'équipement client ou à l'événement déclenchant la demande de connexion.

Dans un mode de réalisation particulier, l'équipement délégué ED, 140 à contacter est identifié par son adresse dans le réseau de communication, par exemple son adresse IP.

Le deuxième message M2 peut comprendre en outre au moins une condition d'exclusion CE dudit sous-groupe 121 d'équipements, parmi la liste de conditions d'exclusion CE suivante :
- une durée maximale d'affectation de l'équipement client au sous-groupe 121 d'équipements (cette durée étant typiquement d'un mois), ce qui se traduit par une durée limitée d'assignation du serveur délégué comme interlocuteur,
- un nombre maximum d'opérations de maintenance permises effectuées par l'équipement client (par exemple une migration logicielle),
- un nombre maximal de tentatives échouées de l'équipement client de contacter l'équipement délégué (par exemple trois tentatives),
- un échec d'une procédure d'authentification entre l'équipement client et l'équipement délégué,
- une détection de fraude ou une détection de faille réseau au niveau de l'équipement délégué,
- une modification d'un paramètre de configuration de l'équipement client,
- une détection d'instructions concernant une opération non permise,
- une détection d'une opération de l'équipement client empêchant l'équipement client de contacter l'équipement délégué (par exemple une opération de retour aux paramètres d'usine).

En variante, une ou plusieurs des conditions précitées sont préenregistrées dans l'équipement client 125, 150, typiquement la condition d'exclusion en cas échec d'une procédure d'authentification entre l'équipement client et l'équipement délégué 140.

Dans une étape E338, le serveur référent principal 110 envoie, à l'équipement délégué 140, un troisième message M3 comprenant une consigne CT de transfert, à au moins un équipement client 125, 150 du sous-groupe 121 d'équipements, d'au moins une commande relative à l'opération de maintenance. Le troisième message M3 peut comprendre au moins un des conditions d'exclusion CE précitées, une ou plusieurs conditions pouvant être préenregistrées dans l'équipement délégué 140.

Plus précisément, la consigne CT indique à l'équipement délégué 140 une procédure à suivre lorsqu'il reçoit un message M9 envoyé par un équipement client 125, 150 du sous-groupe 121 d'équipements, cette procédure étant détaillée ci-dessous aux étapes F356, G356, F358 et G358.

Dans une étape F340, l'équipement délégué 140 envoie au serveur référent principal 110 un quatrième message M4, similaire au premier message M1. Le quatrième message M4 est par exemple envoyé périodiquement et/ou lors d'un événement prédéterminé, tel que la mise sous tension de l'équipement délégué 140, et/ou la fin d'une opération de mise à jour.

Le quatrième message M4 peut comprendre le ou les paramètres du premier équipement 140 correspondants aux paramètres sélectionnés à la sous-étape E312.

Si le message M4 ne contient pas un paramètre correspondant à un paramètre sélectionné, le serveur référent principal 120 envoie une requête à l'équipement délégué pour le récupérer.

Le serveur référent principal 110 détermine, dans une étape E342 et à partir du ou des paramètres de configuration du message M4, si l'opération de maintenance OM doit être mise en œuvre sur l'équipement délégué 140.

En outre, le serveur référent principal 110 peut vérifier, dans une étape E344, que la valeur de chaque paramètre de configuration du message M4 correspond bien à celle du paramètre de configuration correspondant des équipements client 125, 150 du sous-groupe 121 d'équipements.

Si la valeur d'un paramètre PCL, PCS d'un équipement client 125, 150 ne correspond pas à la valeur du paramètre de configuration correspondant du message M4, le serveur référent principal 110 exclut cet équipement client du sous-groupe 121 d'équipements (étape E346). Plus précisément, le serveur référent principal 110 envoie à l'équipement client 125, 150 un cinquième message comprenant une consigne de contacter le serveur référent principal 110 à la place de l'équipement délégué 140, pour mettre en œuvre l'opération de maintenance. Cet équipement client 125, 150 ne met donc pas mettre en œuvre l'étape G356 décrite ci-dessous, et ainsi les étapes F356, F358, G358, G360, G362 et G364, décrites ci-dessous, ne sont pas mises en œuvre. Les sous-étapes E314, E316 et E318 peuvent alors être de nouveau mises en œuvre afin de remplacer l'équipement client exclu.

En variante, lorsque la valeur d'un paramètre PCS de la configuration SI de l'équipement client 125, 150 est modifiée, ce paramètre PCS correspondant à un paramètre de référence, le serveur référent principal 110 exclut cet équipement du sous-groupe 121 sans procéder à la mise en œuvre de l'étape E344.

En outre, en cas de modification de la valeur d'un paramètre PCL, PCS de configuration de l'équipement délégué 140, la valeur de ce paramètre est susceptible de ne plus correspondre à la valeur du paramètre correspondant de chaque équipement client 125, 150. Le serveur référent principal 110 dissout alors le sous-groupe 121 d'équipements (étape 348).

Plus précisément, le serveur référent principal 110 envoie à l'équipement délégué 140 un sixième message de dissolution du sous-groupe 121, comprenant par exemple une consigne de ne plus transférer de commande relative à l'opération de maintenance.

L'équipement délégué 140 envoie alors à chaque équipement client 125, 150 du sous-groupe 121 un septième message comprenant une consigne de contacter serveur référent principal 110 à la place de l'équipement délégué 140, pour mettre en œuvre l'opération de maintenance. Les étapes G356, F356, F358, G358, G360, G362 et G364, décrites ci-dessous, ne sont alors pas mises en œuvre.

Si l'opération de maintenance doit être mise en œuvre, le serveur référent principal 110 envoie (étape E350) un huitième message M8 comprenant une commande CM de maintenance à l'équipement délégué 140, cette commande CM contenant des instructions pour la mise en œuvre de l'opération de maintenance. Sous réception (étape F350) de la commande de maintenance, l'équipement délégué 140 peut enregistrer la commande de maintenance (étape F352).

L'équipement délégué 140 suit ensuite, dans une étape F354, les instructions de la commande de maintenance afin de mettre en œuvre l'opération de maintenance pour lui-même.

De plus, lorsque l'équipement délégué 140 reçoit (étape F356) un neuvième message M9 envoyé (étape G356) par un équipement client 125, 150 du sous-groupe 121 d'équipements, il transmet à cet équipement client 125, 150, dans une étape F358, un dixième message M10 comprenant la commande CM de maintenance reçue à l'étape F350. En transmettant la commande CM de maintenance, l'équipement délégué 140 met en œuvre une partie de l'opération de maintenance.

Après réception G358 de la commande de maintenance, l'équipement client 125, 150 détermine, dans une étape G360, s'il vérifie au moins une condition d'exclusion CE transmise à l'étape E336 par le serveur référent principal 110 dans le deuxième message M2, ou préenregistrée dans l'équipement client 125, 150.

L'équipement délégué 140 peut typiquement transmettre, par exemple dans le message M10, ses paramètres PCS, PCL de configuration correspondants aux paramètres PCR de référence, pour que l'équipement client vérifie si un de ses paramètres PCS, PCL de configuration a été modifié.

Si l'équipement client 125, 150 ne vérifie pas de condition d'exclusion, l'équipement client 125, 150 suit les instructions de la commande de maintenance afin de mettre en œuvre la suite de l'opération de maintenance (étape G362).

Si l'équipement client 125, 150 vérifie au moins une condition d'exclusion CE, l'équipement client 125, 150 s'exclut du sous-groupe 121 d'équipements (étape G364). L'équipement client 125, 150 ne suit alors plus la consigne CC de contacter l'équipement délégué 140 à la place du serveur référent principal 110 du deuxième message M2, et contacte le serveur référent principal 110. Les sous-étapes E314, E316 et E318 peuvent alors être de nouveau mises en œuvre afin de remplacer l'équipement client 125, 150 exclu.

Dans un mode de réalisation particulier, suite à la réception du message M9 en provenance d'un équipement client 125, 150 du sous-groupe 121, l'équipement délégué 140 détermine, si cet équipement client vérifie au moins une condition d'exclusion CE transmise à l'étape E338 par le serveur référent principal 110 dans le troisième message M2, ou préenregistrée dans l'équipement délégué 140. Si cet équipement client vérifie au moins une condition d'exclusion CE, l'équipement délégué 140 l'exclut du sous-groupe 121 d'équipements.

Si le sous-groupe 121 comprend un nombre d'équipements client inférieur à un seuil prédéterminé, le sous-groupe 121 est dissout. Cette condition est par exemple vérifiée par l'équipement délégué 140, ou le serveur référent principal 110.

Les étapes du procédé peuvent être réitérées pour créer au moins un autre sous-groupe 120 d'équipements, pour une même opération de maintenance ou pour une autre opération de maintenance (les paramètres sélectionnés à la sous-étape E312 peuvent alors être différents). Plusieurs équipements délégués déchargent alors le serveur référent principal 110 pour les opérations de maintenance.

Par exemple, le procédé peut comprendre plusieurs mises en œuvre en parallèle de l'étape E320 pour déterminer plusieurs équipements délégué ED, puis, une fois les équipements délégués ED déterminés, plusieurs mises en œuvre en parallèle de l'étape E310, afin de définir un sous-groupe 121 d'équipements pour chaque équipement délégué ED déterminé.

## Revendications

1. Procédé de gestion d'un groupe (120) d'équipements, ledit procédé comprenant les étapes suivantes:
• définition (E310), par un serveur référent principal (110), d'un sous-groupe (121) d'équipements dudit groupe (120) d'équipements, ledit sous-groupe (121) d'équipements comprenant au moins deux équipements (125, 140, 150) dudit groupe (120) d'équipements, les équipements dudit sous-groupe (121) ayant une même valeur pour au moins un paramètre de configuration commun,
• détermination (E320), par le serveur référent principal (110), d'un équipement délégué (ED, 140) pour la mise en œuvre d'au moins une partie d'une opération de maintenance sur au moins un équipement (125, 150), dit "équipement client", dudit sous-groupe (121) d'équipements, ladite détermination étant effectuée sur la base d'un critère de délégation associé audit équipement délégué (ED, 140), l'opération de maintenance correspondant à une mise à jour d'un logiciel dudit au moins un équipement (125, 150)
dans lequel ledit équipement délégué (ED, 140) est un équipement dudit sous-groupe d'équipements, ledit au moins un équipement client (125, 150) étant distinct dudit équipement délégué (ED, 140),
• envoi (E338), par le serveur référent principal (110) et audit équipement délégué (ED, 140), d'un message (M3) comprenant une consigne (CT) de transfert d'au moins une commande relative à ladite opération de maintenance, la consigne (CT) de transfert indiquant à l'équipement délégué (ED, 140) une procédure à suivre lorsqu'il reçoit un message (M9) incluant au moins un paramètre de configuration dudit au moins un équipement client (125, 150),
• suite à une réception (F350), par l'équipement délégué (ED, 140), d'une commande relative à l'opération de maintenance (CM) émise par le serveur référent principal (110) et à une réception (F356) du message (M9) émis par ledit au moins un équipement client (125, 150) et incluant au moins un paramètre de configuration dudit au moins un équipement client (125, 150), une transmission (F358), par l'équipement délégué (ED, 140) et à destination dudit au moins un équipement client (125, 150), de la commande relative à l'opération de maintenance (CM), conformément à ladite procédure à suivre.

2. Procédé selon la revendication 1, dans lequel le critère de délégation associé audit équipement délégué (ED, 140) correspond à un critère de qualité de service dudit équipement délégué (ED, 140).

3. Procédé selon la revendication 1 ou 2, comprenant en outre une étape d'envoi (E336), par le serveur référent principal (110) audit au moins un équipement client (125, 150), d'un message (M2) comprenant une consigne (CC) de contacter l'équipement délégué (ED, 140) à la place du serveur référent principal (110) pour mettre en œuvre ladite opération de maintenance.

4. Procédé selon la revendication 3, dans lequel ledit message (M2) comprenant une consigne (CC) de contacter l'équipement délégué (ED, 140), envoyé audit au moins un équipement client (125, 150) comprend en outre au moins une condition d'exclusion (CE) dudit au moins un équipement client (125, 150) dudit sous-groupe (121) d'équipements.

5. Procédé selon la revendication 4, comprenant en outre les étapes suivantes, mises en œuvre par ledit au moins un équipement (125, 150) du sous-groupe (121) d'équipements :
• une étape de vérification (G360) de ladite au moins une condition d'exclusion (CE) pour ledit au moins un équipement client (125, 150) dudit sous-groupe (121) d'équipements, et
• si ladite au moins une condition d'exclusion (CE) est vérifiée, une étape d'exclusion (G362) dudit équipement client (125, 150) dudit sous-groupe (121) d'équipements.

6. Procédé selon l'une quelconque des revendications 1 à 5, comprenant en outre une étape de dissolution (E348) dudit sous-groupe (121) d'équipements lorsqu'au moins une condition de dissolution est vérifiée, ladite dissolution incluant :
• une étape d'envoi, par le serveur référent principal (110) et à destination de l'équipement délégué (ED, 140), d'un message de dissolution dudit sous-groupe (121) ;
• une étape d'envoi, par l'équipement délégué (ED, 140) et à destination dudit au moins un équipement client (125, 150), d'un message comprenant une consigne de contacter le serveur référent principal (110) à la place de l'équipement délégué (ED, 140), pour mettre en œuvre ladite opération de maintenance.

7. Procédé selon l'une quelconque des revendications 1 à 6, comprenant en outre une étape de détermination d'un nombre maximum d'équipements que peut comprendre ledit sous-groupe (121) d'équipements, en fonction d'au moins un critère de qualité de service associé audit équipement délégué (ED, 140), de sorte à permettre audit équipement délégué (ED, 140) d'atteindre ladite qualité de service.

8. Système (100) comprenant un serveur (110), au moins un équipement client (125, 150) et un équipement délégué (ED, 140),
le serveur (110) comprenant :
• un module de définition d'un sous-groupe (121) d'équipements dudit groupe (120) d'équipements, ledit sous-groupe (121) d'équipements comprenant au moins deux équipements (125, 140, 150) dudit groupe (120) d'équipements, les équipements dudit sous-groupe (121) ayant une même valeur pour au moins un paramètre de configuration commun,
• un module de détermination d'un équipement délégué (ED, 140) pour la mise en œuvre d'au moins une partie d'une opération de maintenance sur au moins un équipement (125, 150), dit "équipement client", dudit sous-groupe (121) d'équipements, ladite détermination étant effectuée sur la base d'un critère de délégation associé audit équipement délégué (ED, 140), l'opération de maintenance correspondant à une mise à jour d'un logiciel dudit au moins un équipement (125, 150)
dans lequel ledit équipement délégué (ED, 140) est un équipement dudit sous-groupe d'équipements, ledit au moins un équipement client (125, 150) étant distinct dudit équipement délégué (ED, 140),
• un module d'envoi, audit équipement délégué (ED, 140), d'un message (M3) comprenant une consigne (CT) de transfert d'au moins une commande relative à ladite opération de maintenance, la consigne (CT) de transfert indiquant à l'équipement délégué (ED, 140) une procédure à suivre lorsqu'il reçoit un message (M9) incluant au moins un paramètre de configuration dudit au moins un équipement client (125, 150),
l'équipement délégué (ED, 140) comprenant :
• un module de réception d'une commande relative à l'opération de maintenance (CM) émise par le serveur référent principal (110) et de réception du message (M9) émis par ledit au moins un équipement client (125, 150) et incluant au moins un paramètre de configuration dudit au moins un équipement client (125, 150),
• un module de transmission, à destination dudit au moins un équipement client (125, 150), de la commande relative à l'opération de maintenance (CM), conformément à ladite procédure à suivre.

9. Programme d'ordinateur (P1) comportant des instructions pour l'exécution des étapes du procédé selon l'une quelconque des revendications 1 à 7 lorsque ledit programme est exécuté par un ordinateur.

10. Support d'enregistrement lisible par un ordinateur sur lequel est enregistré un programme d'ordinateur (P1) comprenant des instructions pour l'exécution des étapes du procédé selon l'une quelconque des revendications 1 à 7.

## Patentansprüche

1. Verfahren zur Verwaltung einer Gruppe (120) von Geräten, wobei das Verfahren die folgenden Schritte umfasst:
• Definieren (E310), durch einen Hauptverwaltungsserver (110), einer Untergruppe (121) von Geräten der Gruppe (120) von Geräten, wobei die Untergruppe (121) von Geräten mindestens zwei Geräte (125, 140, 150) der Gruppe (120) von Geräten umfasst, wobei die Geräte der Untergruppe (121) für mindestens einen gemeinsamen Konfigurationsparameter einen selben Wert haben,
• Bestimmen (E320), durch den Hauptverwaltungsserver (110), eines delegierten Geräts (ED, 140) für die Durchführung mindestens eines Teils einer Wartungsoperation an mindestens einem Gerät (125, 150), "Client-Gerät" genannt, der Untergruppe (121) von Geräten, wobei das Bestimmen auf der Grundlage eines dem delegierten Gerät (ED, 140) zugeordneten Delegationskriteriums erfolgt, wobei die Wartungsoperation einer Aktualisierung einer Software des mindestens einen Geräts (125, 150) entspricht wobei das delegierte Gerät (ED, 140) ein Gerät der Untergruppe von Geräten ist, wobei das mindestens eine Client-Gerät (125, 150) verschieden von dem delegierten Gerät (ED, 140) ist,
• Senden (E338), durch den Hauptverwaltungsserver (110) und an das delegierte Gerät (ED, 140), einer Nachricht (M3), die eine Anweisung (CT) zur Weiterleitung mindestens eines Befehls bezüglich der Wartungsoperation umfasst, wobei die Anweisung (CT) zur Weiterleitung dem delegierten Gerät (ED, 140) ein Verfahren angibt, das zu befolgen ist, wenn es eine Nachricht (M9) empfängt, die mindestens einen Konfigurationsparameter des mindestens einen Client-Geräts (125, 150) beinhaltet,
• nach einem Empfangen (F350), durch das delegierte Gerät (ED, 140), eines Befehls bezüglich der Wartungsoperation (CM), der von dem Hauptverwaltungsserver (110) gesendet wird, und einem Empfangen (F356) der Nachricht (M9), die von dem mindestens einen Client-Gerät (125, 150) gesendet wird und mindestens einen Konfigurationsparameter des mindestens einen Client-Geräts (125, 150) beinhaltet, ein Übertragen (F358), durch das delegierte Gerät (ED, 140) und an das mindestens eine Client-Gerät (125, 150), des Befehls bezüglich der Wartungsoperation (CM), gemäß dem zu befolgenden Verfahren.

2. Verfahren nach Anspruch 1, wobei das dem delegierten Gerät (ED, 140) zugeordnete Delegationskriterium einem Dienstgütekriterium des delegierten Geräts (ED, 140) entspricht.

3. Verfahren nach Anspruch 1 oder 2, umfassend ferner einen Schritt des Sendens (E336), durch den Hauptverwaltungsserver (110) an das mindestens eine Client-Gerät (125, 150), einer Nachricht (M2), die eine Anweisung (CC) umfasst, das delegierte Gerät (ED, 140) anstelle des Hauptverwaltungsservers (110) zu kontaktieren, um die Wartungsoperation durchzuführen.

4. Verfahren nach Anspruch 3, wobei die eine Anweisung (CC), das delegierte Gerät (ED, 140) zu kontaktieren, umfassende Nachricht (M2), die an das mindestens eine Client-Gerät (125, 150) gesendet wird, ferner mindestens eine Ausschlussbedingung (CE) zum Ausschließen des mindestens einen Client-Geräts (125, 150) aus der Untergruppe (121) von Geräten umfasst.

5. Verfahren nach Anspruch 4, umfassend ferner die folgenden Schritte, die von dem mindestens einen Gerät (125, 150) der Untergruppe (121) von Geräten durchgeführt werden:
• einen Schritt des Überprüfens (G360) der mindestens einen Ausschlussbedingung (CE) für das mindestens eine Client-Gerät (125, 150) der Untergruppe (121) von Geräten, und
• wenn die mindestens eine Ausschlussbedingung (CE) erfüllt ist, einen Schritt des Ausschließens (G362) des Client-Geräts (125, 150) aus der Untergruppe (121) von Geräten.

6. Verfahren nach einem der Ansprüche 1 bis 5, umfassend ferner einen Schritt des Auflösens (E348) der Untergruppe (121) von Geräten, wenn mindestens eine Auflösungsbedingung erfüllt ist, wobei die Auflösung beinhaltet:
• einen Schritt des Sendens, durch den Hauptverwaltungsserver (110) und an das delegierte Gerät (ED, 140), einer Nachricht zur Auflösung der Untergruppe (121);
• einen Schritt des Sendens, durch das delegierte Gerät (ED, 140) und an das mindestens eine Client-Gerät (125, 150), einer Nachricht, die eine Anweisung umfasst, den Hauptverwaltungsserver (110) anstelle des delegierten Geräts (ED, 140) zu kontaktieren, um die Wartungsoperation durchzuführen.

7. Verfahren nach einem der Ansprüche 1 bis 6, umfassend ferner einen Schritt des Bestimmens einer maximalen Anzahl von Geräten, die die Untergruppe (121) von Geräten umfassen kann, in Abhängigkeit von mindestens einem dem delegierten Gerät (ED, 140) zugeordneten Dienstgütekriterium, so dass dem delegierten Gerät (ED, 140) ermöglicht wird, die Dienstgüte zu erreichen.

8. System (100), umfassend einen Server (110), mindestens ein Client-Gerät (125, 150) und ein delegiertes Gerät (ED, 140),
wobei der Server (110) umfasst:
• ein Modul zum Definieren einer Untergruppe (121) von Geräten der Gruppe (120) von Geräten, wobei die Untergruppe (121) von Geräten mindestens zwei Geräte (125, 140, 150) der Gruppe (120) von Geräten umfasst, wobei die Geräte der Untergruppe (121) für mindestens einen gemeinsamen Konfigurationsparameter einen selben Wert haben,
• ein Modul zum Bestimmen eines delegierten Geräts (ED, 140) für die Durchführung mindestens eines Teils einer Wartungsoperation an mindestens einem Gerät (125, 150), "Client-Gerät" genannt, der Untergruppe (121) von Geräten, wobei das Bestimmen auf der Grundlage eines dem delegierten Gerät (ED, 140) zugeordneten Delegationskriteriums erfolgt, wobei die Wartungsoperation einer Aktualisierung einer Software des mindestens einen Geräts (125, 150) entspricht wobei das delegierte Gerät (ED, 140) ein Gerät der Untergruppe von Geräten ist, wobei das mindestens eine Client-Gerät (125, 150) verschieden von dem delegierten Gerät (ED, 140) ist,
• ein Modul zum Senden, an das delegierte Gerät (ED, 140), einer Nachricht (M3), die eine Anweisung (CT) zur Weiterleitung mindestens eines Befehls bezüglich der Wartungsoperation umfasst, wobei die Anweisung (CT) zur Weiterleitung dem delegierten Gerät (ED, 140) ein Verfahren angibt, das zu befolgen ist, wenn es eine Nachricht (M9) empfängt, die mindestens einen Konfigurationsparameter des mindestens einen Client-Geräts (125, 150) beinhaltet,
wobei das delegierte Gerät (ED, 140) umfasst:
• ein Modul zum Empfangen eines Befehls bezüglich der Wartungsoperation (CM), der von dem Hauptverwaltungsserver (110) gesendet wird, und zum Empfangen der Nachricht (M9), die von dem mindestens einen Client-Gerät (125, 150) gesendet wird und mindestens einen Konfigurationsparameter des mindestens einen Client-Geräts (125, 150) beinhaltet,
• ein Modul zum Übertragen, an das mindestens eine Client-Gerät (125, 150), des Befehls bezüglich der Wartungsoperation (CM), gemäß dem zu befolgenden Verfahren.

9. Computerprogramm (P1), das Anweisungen beinhaltet, die bei der Ausführung des Programms durch einen Computer die Schritte des Verfahrens nach einem der Ansprüche 1 bis 7 ausführen.

10. Computerlesbares Speichermedium, auf dem ein Computerprogramm (P1) gespeichert ist, das Anweisungen zur Ausführung der Schritte des Verfahrens nach einem der Ansprüche 1 bis 7 umfasst.

## Claims

1. Method for managing a group (120) of equipments, said method comprising the following steps:
• a main referent server (110) defining (E310) a subgroup (121) of equipments of said group (120) of equipments, said subgroup (121) of equipments comprising at least two equipments (125, 140, 150) of said group (120) of equipments, the equipments of said subgroup (121) having the same value for at least one common configuration parameter,
• the main referent server (110) determining (E320) a delegated equipment (ED, 140) for implementing at least part of a maintenance operation on at least one equipment (125, 150), referred to as a "client equipment", of said subgroup (121) of equipments, said determination being carried out on the basis of a delegation criterion associated with said delegated equipment (ED, 140), the maintenance operation corresponding to an update of software of said at least one equipment (125, 150) wherein said delegated equipment (ED, 140) is an equipment of said subgroup of equipments, said at least one client equipment (125, 150) being distinct from said delegated equipment (ED, 140),
• the main referent server (110) sending (E338), to said delegated equipment (ED, 140), a message (M3) comprising an instruction (CT) to transfer at least one command relating to said maintenance operation, the transfer instruction (CT) indicating to the delegated equipment (ED, 140) a procedure to be followed when it receives a message (M9) including at least one configuration parameter of said at least one client equipment (125, 150),
• after a command relating to the maintenance operation (CM) sent by the main referent server (110) is received (F350) by the delegated equipment (ED, 140) and after the message (M9) sent by said at least one client equipment (125, 150) and including at least one configuration parameter of said at least one client equipment (125, 150) is received (F356), the delegated equipment (ED, 140) transmitting (F358), to said at least one client equipment (125, 150), the command relating to the maintenance operation (CM), in accordance with said procedure to be followed.

2. Method according to Claim 1, wherein the delegation criterion associated with said delegated equipment (ED, 140) corresponds to a criterion of quality of service of said delegated equipment (ED, 140).

3. Method according to Claim 1 or 2, further comprising a step of the main referent server (110) sending (E336), to said at least one client equipment (125, 150), a message (M2) comprising an instruction (CC) to contact the delegated equipment (ED, 140) in place of the main referent server (110) in order to implement said maintenance operation.

4. Method according to Claim 3, wherein said message (M2) comprising an instruction (CC) to contact the delegated equipment (ED, 140), sent to said at least one client equipment (125, 150), further comprises at least one condition (CE) for excluding said at least one client equipment (125, 150) from said subgroup (121) of equipments.

5. Method according to Claim 4, further comprising the following steps, which are implemented by said at least one equipment (125, 150) of the subgroup (121) of equipments:
• a step of verifying (G360) said at least one exclusion condition (CE) for said at least one client equipment (125, 150) of said subgroup (121) of equipments, and
• if said at least one exclusion condition (CE) is satisfied, a step of excluding (G362) said client equipment (125, 150) from said subgroup (121) of equipments.

6. Method according to any one of Claims 1 to 5, further comprising a step of dissolving (E348) said subgroup (121) of equipments when at least one dissolution condition is satisfied, said dissolution including:
• a step of the main referent server (110) sending, to the delegated equipment (ED , 140), a message dissolving said subgroup (121);
• a step of the delegated equipment (ED, 140) sending, to said at least one client equipment (125, 150), a message comprising an instruction to contact the main referent server (110) in place of the delegated equipment (ED, 140), in order to implement said maintenance operation.

7. Method according to any one of Claims 1 to 6, further comprising a step of determining a maximum number of equipments which said subgroup (121) of equipments may comprise, depending on at least one quality of service criterion associated with said delegated equipment (ED, 140), so as to make it possible for said delegated equipment (ED, 140) to achieve said quality of service.

8. System (100) comprising a server (110), at least one client equipment (125, 150) and a delegated equipment (ED, 140),
the server (110) comprising:
• a module for defining a subgroup (121) of equipments of said group (120) of equipments, said subgroup (121) of equipments comprising at least two equipments (125, 140, 150) of said group (120) of equipments, the equipments of said subgroup (121) having the same value for at least one common configuration parameter,
• a module for determining a delegated equipment (ED, 140) for implementing at least part of a maintenance operation on at least one equipment (125, 150), referred to as a "client equipment", of said subgroup (121) of equipments, said determination being carried out on the basis of a delegation criterion associated with said delegated equipment (ED, 140), the maintenance operation corresponding to an update of software of said at least one equipment (125, 150),
wherein said delegated equipment (ED, 140) is an equipment of said subgroup of equipments, said at least one client equipment (125, 150) being distinct from said delegated equipment (ED, 140),
• a module for sending, to said delegated equipment (ED, 140), a message (M3) comprising an instruction (CT) to transfer at least one command relating to said maintenance operation, the transfer instruction (CT) indicating to the delegated equipment (ED, 140) a procedure to be followed when it receives a message (M9) including at least one configuration parameter of said at least one client equipment (125, 150),
the delegated equipment (ED, 140) comprising:
• a module for receiving a command relating to the maintenance operation (CM) sent by the main referent server (110) and for receiving the message (M9) sent by said at least one client equipment (125, 150) and including at least one configuration parameter of said at least one client equipment (125, 150),
• a module for transmitting, to said at least one client equipment (125, 150), the command relating to the maintenance operation (CM), in accordance with said procedure to be followed.

9. Computer program (P1) comprising instructions for executing the steps of the method according to any one of Claims 1 to 7 when said program is executed by a computer.

10. Computer-readable storage medium on which a computer program (P1) comprising instructions for executing the steps of the method according to any one of Claims 1 to 7 is stored.
